(19) Europäisches Patentamt
European Patent Office
Office européen des brevets

(11) **EP 4 422 095 A1**

(12) **EUROPEAN PATENT APPLICATION**
published in accordance with Art. 153(4) EPC

(43) Date of publication:
**28.08.2024 Bulletin 2024/35**

(21) Application number: **22897794.8**

(22) Date of filing: **22.11.2022**

(51) International Patent Classification (IPC):
***H04B 17/382*** (2015.01)

(52) Cooperative Patent Classification (CPC):
**H04B 17/382**

(86) International application number:
**PCT/CN2022/133468**

(87) International publication number:
**WO 2023/093711 (01.06.2023 Gazette 2023/22)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **23.11.2021 CN 202111398330**

(71) Applicant: **Huawei Technologies Co., Ltd.**
**Shenzhen, Guangdong 518129 (CN)**

(72) Inventors:
• **GUO, Ziyang**
  **Shenzhen, Guangdong 518129 (CN)**
• **LIU, Peng**
  **Shenzhen, Guangdong 518129 (CN)**
• **LUO, Jiajun**
  **Shenzhen, Guangdong 518129 (CN)**
• **YANG, Xun**
  **Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(54) **SPECTRUM SENSING METHOD AND APPARATUS, AND STORAGE MEDIUM AND PROGRAM PRODUCT**

(57)    This application discloses a spectrum sensing method and apparatus, a storage medium, and a program product. The method includes: A first device sends a spectrum sensing request frame to a second device, where the spectrum sensing request frame is used to request the second device to perform spectrum sensing, and the spectrum sensing request frame includes at least one of the following spectrum sensing parameters: a start time, an end time, duration, a sampling frequency, and a result type. The second device sends a request acknowledgment frame to the first device, where the request acknowledgment frame is used to acknowledge that the spectrum sensing request frame is received. The second device performs spectrum sensing based on the at least one spectrum sensing parameter, to obtain a spectrum sensing result. The second device sends a spectrum sensing feedback frame to the first device, where the spectrum sensing feedback frame is used to feed back the spectrum sensing result. The first device sends the spectrum sensing request frame, so that the second device can perform spectrum sensing based on information carried in the spectrum sensing request frame, and the first device can obtain the accurate spectrum sensing result of the second device.

FIG. 2

## Description

This application claims priority to Chinese Patent Application No. 202111398330.7, filed with the China National Intellectual Property Administration on November 23, 2021 and entitled "SPECTRUM SENSING METHOD AND APPARATUS, STORAGE MEDIUM, AND PROGRAM PRODUCT", which is incorporated herein by reference in its entirety.

## TECHNICAL FIELD

This application relates to the field of communication technologies, and in particular, to a spectrum sensing method and apparatus, a storage medium, and a program product.

## BACKGROUND

That a receiver/transmitter obtains a spectrum sensing result of a peer end is of great significance for improving communication performance of the receiver end and the transmitter end. Currently, there is no related solution to accurately obtain the spectrum sensing result of the peer end.

## SUMMARY

This application provides a spectrum sensing method and apparatus, a storage medium, and a program product, to obtain an accurate spectrum sensing result.

According to a first aspect, a spectrum sensing method is provided. The method includes: A first device sends a spectrum sensing request frame to a second device, where the spectrum sensing request frame is used to request the second device to perform spectrum sensing, and the spectrum sensing request frame includes at least one of the following spectrum sensing parameters: a start time of spectrum sensing, an end time of spectrum sensing, spectrum sensing duration, a sampling frequency of spectrum sensing, and a type of a spectrum sensing result; the first device receives a request acknowledgment frame from the second device, where the request acknowledgment frame is used to acknowledge that the spectrum sensing request frame is received; and the first device receives a spectrum sensing feedback frame from the second device, where the spectrum sensing feedback frame is used to feed back the spectrum sensing result. In this aspect, the first device sends the spectrum sensing request frame, so that the second device can perform spectrum sensing based on information carried in the spectrum sensing request frame, and the first device can obtain the accurate spectrum sensing result of the second device.

According to a second aspect, a spectrum sensing method is provided. The method includes: A second device receives a spectrum sensing request frame from a first device, where the spectrum sensing request frame is used to request the second device to perform spectrum sensing, and the spectrum sensing request frame includes at least one of the following spectrum sensing parameters: a start time of spectrum sensing, an end time of spectrum sensing, spectrum sensing duration, a sampling frequency of spectrum sensing, and a type of a spectrum sensing result; the second device sends a request acknowledgment frame to the first device, where the request acknowledgment frame is used to acknowledge that the spectrum sensing request frame is received; the second device performs spectrum sensing based on the at least one spectrum sensing parameter, to obtain the spectrum sensing result; and the second device sends a spectrum sensing feedback frame to the first device, where the spectrum sensing feedback frame is used to feed back the spectrum sensing result. In this aspect, the second device receives the spectrum sensing request frame sent by the first device, so that the second device can perform spectrum sensing based on information carried in the spectrum sensing request frame, and the first device can obtain the accurate spectrum sensing result of the second device.

According to a third aspect, a spectrum sensing method is provided. The method includes: A first device receives a spectrum sensing request frame from a second device, where the spectrum sensing request frame is used to request the first device to acknowledge at least one of the following spectrum sensing parameters, and the spectrum sensing request frame includes at least one of the following spectrum sensing parameters: a start time of spectrum sensing, an end time of spectrum sensing, spectrum sensing duration, a sampling frequency of spectrum sensing, and a type of a spectrum sensing result; the first device sends a request acknowledgment frame to the second device, where the request acknowledgment frame is used to acknowledge that the spectrum sensing request frame is received; and the first device receives a spectrum sensing feedback frame from the second device, where the spectrum sensing feedback frame is used to feed back the spectrum sensing result. In this aspect, after receiving the spectrum sensing request frame sent by the second device, the first device acknowledges the spectrum sensing request frame, so that the second device can perform spectrum sensing based on the spectrum sensing request frame, and the first device can obtain the accurate spectrum sensing result of the second device.

According to a fourth aspect, a spectrum sensing method is provided. The method includes: A second device sends a spectrum sensing request frame to a first device, where the spectrum sensing request frame is used to request the first device to acknowledge at least one of the following spectrum sensing parameters: a start time of spectrum sensing, an end time of spectrum sensing, spectrum sensing duration, a sampling frequency of spectrum sensing, and a type of a spectrum sensing result; the second device receives a request acknowledgment frame from the first device, where the request acknowledgment frame is used to acknowledge that the spectrum sensing request frame is received; the second device performs spectrum sensing based on the at least one spectrum sensing parameter, to obtain the spectrum sensing result; and the second device sends a spectrum sensing feedback frame to the first device, where the spectrum sensing feedback frame is used to feed back the spectrum sensing result. In this aspect, the second device sends the spectrum sensing request frame to the first device. After receiving the spectrum sensing request frame sent by the second device, the first device acknowledges the spectrum sensing request frame, so that the second device can perform spectrum sensing based on the spectrum sensing request frame, and the first device can obtain the accurate spectrum sensing result of the second device.

With reference to the first aspect to the fourth aspect, in a possible implementation, the spectrum sensing result includes at least one of the following: first spectrum sensing information and a first modulation and coding scheme (modulation and coding scheme, MCS). In this implementation, the spectrum sensing result may be spectrum sensing information, so that the first device can perform inference based on the spectrum sensing information of the second device, to obtain an MCS; or the spectrum sensing result may be an MCS obtained by the second device through inference based on the spectrum sensing information obtained by the second device, and the MCS is sent to the first device, so that the first device does not need to perform MCS inference.

With reference to any one of the first aspect to the fourth aspect or the implementations of the first aspect to the fourth aspect, in another possible implementation, the first spectrum sensing information includes interference energy information in a radio environment of the second device. In this implementation, the spectrum sensing information includes the interference energy information in the radio environment of the second device, so that the first device or the second device can infer an appropriate MCS based on the spectrum sensing information, thereby reducing a packet loss and improving communication reliability.

With reference to any one of the first aspect to the fourth aspect or the implementations of the first aspect to the fourth aspect, in still another possible implementation, the spectrum sensing request frame includes a first category field, a first action field, and a first element field, the first category field indicates that a type of the spectrum sensing request frame is a spectrum sensing type, the first action field indicates that an action is a spectrum sensing request, and the first element field includes the at least one spectrum sensing parameter. In this implementation, the spectrum sensing request frame may be, for example, a new management frame. That the frame is the spectrum sensing type may be determined based on the type of the spectrum sensing request frame, and that the action is the spectrum sensing request may be determined based on the action field.

With reference to any one of the first aspect to the fourth aspect or the implementations of the first aspect to the fourth aspect, in yet another possible implementation, the spectrum sensing feedback frame includes a second category field, a second action field, and a second element field, the second category field indicates that a type of the spectrum sensing feedback frame is a spectrum sensing type, the second action field indicates that an action is spectrum sensing feedback, and the second element field includes the spectrum sensing result. In this implementation, the spectrum sensing request frame may be, for example, a new management frame. That the frame is the spectrum sensing type may be determined based on the type of the spectrum sensing request frame, and that the action is the spectrum sensing feedback may be determined based on the action field.

With reference to any one of the first aspect to the fourth aspect or the implementations of the first aspect to the fourth aspect, in still yet another possible implementation, the spectrum sensing request frame includes a third action field and a third element field, the third action field indicates that an action is a spectrum sensing request, and the third element field includes the at least one spectrum sensing parameter. In this implementation, the spectrum sensing request frame may be, for example, a new management frame. The action field of the frame may be used to determine that the frame is the spectrum sensing type and the action is the spectrum sensing request.

With reference to any one of the first aspect to the fourth aspect or the implementations of the first aspect to the fourth aspect, in a further possible implementation, the spectrum sensing feedback frame includes a fourth action field and a fourth element field, the fourth action field indicates that an action is spectrum sensing feedback, and the fourth element field includes the spectrum sensing result. In this implementation, the spectrum sensing request frame may be, for example, a new management frame. The action field of the frame may be used to determine that the frame is the spectrum sensing type and the action is the spectrum sensing feedback.

With reference to any one of the first aspect to the fourth aspect or the implementations of the first aspect to the fourth aspect, in a still further possible implementation, the spectrum sensing request frame includes a first aggregated control subfield, and the first aggregated control subfield includes the at least one spectrum sensing parameter.

With reference to any one of the first aspect to the fourth aspect or the implementations of the first aspect to the fourth aspect, in a yet further possible implementation, the spectrum sensing feedback frame includes a second aggregated control subfield, and the second aggregated control subfield includes the spectrum sensing result.

With reference to any one of the first aspect, the third aspect, or the implementations of the first aspect and the third aspect, in a still yet further possible implementation, the method further includes: The first device performs spectrum sensing to obtain second spectrum sensing information; the first device performs inference based on the second spectrum sensing information, to obtain a second MCS; the first device performs at least one round of consistency test based on the spectrum sensing result and the second MCS; and the first device obtains a spectrum sensing compensation value after the at least one round of consistency test succeeds. In this implementation, the first device can compare the spectrum sensing result received from the second device with the MCS obtained through inference based on the spectrum sensing information obtained through spectrum sensing performed by the first device, to determine consistency of spectrum sensing of the first device and the second device; and the spectrum sensing compensation value of the first device is obtained after the consistency test succeeds. The compensation value may be 0, a positive number, or a negative number.

With reference to any one of the first aspect, the third aspect, or the implementations of the first aspect and the third aspect, in even yet another possible implementation, the method further includes: The first device performs spectrum sensing to obtain third spectrum sensing information; the first device compensates for the third spectrum sensing information based on the spectrum sensing compensation value, to obtain fourth spectrum sensing information; the first device performs inference based on the fourth spectrum sensing information, to obtain a third MCS; and the first device sends data to the second device based on the third MCS. In this implementation, after obtaining the spectrum sensing compensation value of the first device based on the consistency test, the first device does not need to interact with the second device, and compensates for the spectrum sensing information based on the spectrum sensing compensation value and the spectrum sensing information obtained through sensing of the first device, to obtain the spectrum sensing information consistent with that of the second device, thereby obtaining an appropriate MCS based on compensated spectrum sensing information. This can reduce a packet loss or increase a rate, and improve communication reliability.

According to a fifth aspect, a spectrum sensing apparatus is provided. The apparatus may implement the spectrum sensing method in the first aspect or the third aspect. For example, the spectrum sensing apparatus may be a chip or a device. The foregoing method may be implemented by software, hardware, or hardware executing corresponding software.

In a possible implementation, the apparatus includes a transceiver unit, and may further include a processing unit, where the transceiver unit is configured to send a spectrum sensing request frame to a second device, where the spectrum sensing request frame is used to request the second device to perform spectrum sensing, and the spectrum sensing request frame includes at least one of the following spectrum sensing parameters: a start time of spectrum sensing, an end time of spectrum sensing, spectrum sensing duration, a sampling frequency of spectrum sensing, and a type of a spectrum sensing result; the transceiver unit is further configured to receive a request acknowledgment frame from the second device, where the request acknowledgment frame is used to acknowledge that the spectrum sensing request frame is received; and the transceiver unit is further configured to receive a spectrum sensing feedback frame from the second device, where the spectrum sensing feedback frame is used to feed back the spectrum sensing result.

In a possible implementation, the apparatus includes a transceiver unit, and may further include a processing unit, where the transceiver unit is configured to receive a spectrum sensing request frame from a second device, where the spectrum sensing request frame is used to request the apparatus to acknowledge at least one of the following spectrum sensing parameters: a start time of spectrum sensing, an end time of spectrum sensing, spectrum sensing duration, a sampling frequency of spectrum sensing, and a type of a spectrum sensing result; the transceiver unit is further configured to send a request acknowledgment frame to the second device, where the request acknowledgment frame is used to acknowledge that the spectrum sensing request frame is received; and the transceiver unit is further configured to receive a spectrum sensing feedback frame from the second device, where the spectrum sensing feedback frame is used to feed back the spectrum sensing result.

Optionally, the spectrum sensing result includes at least one of the following: first spectrum sensing information and a first MCS.

Optionally, the first spectrum sensing information includes interference energy information in a radio environment of the second device.

Optionally, the spectrum sensing request frame includes a first category field, a first action field, and a first element field, the first category field indicates that a type of the spectrum sensing request frame is a spectrum sensing type, the first action field indicates that an action is a spectrum sensing request, and the first element field includes the at least one spectrum sensing parameter.

Optionally, the spectrum sensing feedback frame includes a second category field, a second action field, and a second element field, the second category field indicates that a type of the spectrum sensing feedback frame is a spectrum sensing type, the second action field indicates that an action is spectrum sensing feedback, and the second element field includes the spectrum sensing result.

Optionally, the spectrum sensing request frame includes a third action field and a third element field, the third action field indicates that an action is a spectrum sensing request, and the third element field includes the at least one spectrum sensing parameter.

Optionally, the spectrum sensing feedback frame includes a fourth action field and a fourth element field, the fourth action field indicates that an action is spectrum sensing feedback, and the fourth element field includes the spectrum sensing result.

Optionally, the spectrum sensing request frame includes a first aggregated control subfield, and the first aggregated control subfield includes the at least one spectrum sensing parameter.

Optionally, the spectrum sensing feedback frame includes a second aggregated control subfield, and the second aggregated control subfield includes the spectrum sensing result.

Optionally, the processing unit is configured to perform spectrum sensing to obtain second spectrum sensing information; the processing unit is further configured to perform inference based on the second spectrum sensing information, to obtain a second MCS; the processing unit is further configured to perform at least one round of consistency test based on the spectrum sensing result and the second MCS; and the processing unit is further configured to obtain a spectrum sensing compensation value after the at least one round of consistency test succeeds.

Optionally, the processing unit is further configured to perform spectrum sensing to obtain third spectrum sensing information; the processing unit is further configured to compensate for the third spectrum sensing information based on the spectrum sensing compensation value, to obtain fourth spectrum sensing information; the processing unit is further configured to perform inference based on the fourth spectrum sensing information, to obtain a third MCS; and the transceiver unit is further configured to send data to the second device based on the third MCS.

In another possible implementation, the spectrum sensing apparatus is configured to perform the method in the first aspect or the third aspect and the possible implementations of the first aspect or the third aspect.

According to a sixth aspect, a spectrum sensing apparatus is provided. The spectrum sensing apparatus may implement the spectrum sensing method in the second aspect or the fourth aspect. For example, the spectrum sensing apparatus may be a chip or a device. The foregoing method may be implemented by software, hardware, or hardware executing corresponding software.

In a possible implementation, the apparatus includes a transceiver unit and a processing unit, where the transceiver unit is configured to receive a spectrum sensing request frame from a first device, where the spectrum sensing request frame is used to request a second device to perform spectrum sensing, and the spectrum sensing request frame includes at least one of the following spectrum sensing parameters: a start time of spectrum sensing, an end time of spectrum sensing, spectrum sensing duration, a sampling frequency of spectrum sensing, and a type of a spectrum sensing result; the transceiver unit is further configured to send a request acknowledgment frame to the first device, where the request acknowledgment frame is used to acknowledge that the spectrum sensing request frame is received; the processing unit is configured to perform spectrum sensing based on the at least one spectrum sensing parameter, to obtain the spectrum sensing result; and the transceiver unit is further configured to send a spectrum sensing feedback frame to the first device, where the spectrum sensing feedback frame is used to feed back the spectrum sensing result.

In a possible implementation, the apparatus includes a transceiver unit and a processing unit, where the transceiver unit is configured to send a spectrum sensing request frame to a first device, where the spectrum sensing request frame is used to request the first device to acknowledge at least one of the following spectrum sensing parameters: a start time of spectrum sensing, an end time of spectrum sensing, spectrum sensing duration, a sampling frequency of spectrum sensing, and a type of a spectrum sensing result; the transceiver unit is further configured to receive a request acknowledgment frame from the first device, where the request acknowledgment frame is used to acknowledge that the spectrum sensing request frame is received; the processing unit is configured to perform spectrum sensing based on the at least one spectrum sensing parameter, to obtain the spectrum sensing result; and the transceiver unit is further configured to send a spectrum sensing feedback frame to the first device, where the spectrum sensing feedback frame is used to feed back the spectrum sensing result.

Optionally, the spectrum sensing result includes at least one of the following: first spectrum sensing information and a first modulation and coding scheme MCS.

Optionally, the first spectrum sensing information includes interference energy information in a radio environment of the second device.

Optionally, the spectrum sensing request frame includes a first category field, a first action field, and a first element field, the first category field indicates that a type of the spectrum sensing request frame is a spectrum sensing type, the first action field indicates that an action is a spectrum sensing request, and the first element field includes the at least one spectrum sensing parameter.

Optionally, the spectrum sensing feedback frame includes a second category field, a second action field, and a second element field, the second category field indicates that a type of the spectrum sensing feedback frame is a spectrum sensing type, the second action field indicates that an action is spectrum sensing feedback, and the second element field includes the spectrum sensing result.

Optionally, the spectrum sensing request frame includes a third action field and a third element field, the third action field indicates that an action is a spectrum sensing request, and the third element field includes the at least one spectrum sensing parameter.

Optionally, the spectrum sensing feedback frame includes a fourth action field and a fourth element field, the fourth action field indicates that an action is spectrum sensing feedback, and the fourth element field includes the spectrum sensing result.

Optionally, the spectrum sensing request frame includes a first aggregated control subfield, and the first aggregated control subfield includes the at least one spectrum sensing parameter.

Optionally, the spectrum sensing feedback frame includes a second aggregated control subfield, and the second aggregated control subfield includes the spectrum sensing result.

In another possible implementation, the spectrum sensing apparatus is configured to perform the method in the second aspect or the fourth aspect and the possible implementations of the second aspect or the fourth aspect.

In still another possible implementation, the spectrum sensing apparatus in the fifth aspect or the sixth aspect includes a processor coupled to a memory. The processor is configured to support the apparatus in performing a corresponding function in the foregoing spectrum sensing method. The memory is configured to be coupled to the processor, and stores a computer program (or computer-executable instructions) and/or data necessary for the apparatus. Optionally, the spectrum sensing apparatus may further include a communication interface, configured to support communication between the apparatus and another network element, for example, sending or receiving of data and/or signals. For example, the communication interface may be a transceiver, a circuit, a bus, a module, or another type of communication interface. Optionally, the memory may be located inside the spectrum sensing apparatus and integrated with the processor; or may be located outside the spectrum sensing apparatus.

In yet another possible implementation, the spectrum sensing apparatus in the fifth aspect or the sixth aspect includes a processor and a transceiver apparatus. The processor is coupled to the transceiver apparatus. The processor is configured to execute a computer program or instructions, to control the transceiver apparatus to receive and send information. When the processor executes the computer program or the instructions, the processor is further configured to implement the foregoing method through a logic circuit or by executing code instructions. The transceiver apparatus may be a transceiver, a transceiver circuit, or an input/output interface, and is configured to: receive a signal from a spectrum sensing apparatus other than the spectrum sensing apparatus and transmit the signal to the processor; or send a signal from the processor to a spectrum sensing apparatus other than the spectrum sensing apparatus. When the spectrum sensing apparatus is a chip, the transceiver apparatus is a transceiver circuit or an input/output interface.

When the spectrum sensing apparatus in the fifth aspect or the sixth aspect is the chip, a sending unit may be an output unit, for example, an output circuit or a communication interface, and a receiving unit may be an input unit, for example, an input circuit or a communication interface. When the spectrum sensing apparatus is a terminal, a sending unit may be a transmitter or a transmitter machine, and a receiving unit may be a receiver or a receiver machine.

According to a seventh aspect, a communication system is provided. The communication system includes the spectrum sensing apparatus in any one of the fifth aspect or the implementations of the fifth aspect, and at least one spectrum sensing apparatus in any one of the sixth aspect or the implementations of the sixth aspect.

According to an eighth aspect, a computer-readable storage medium is provided, and stores a computer program or instructions. When the program or the instructions are executed by a processor, the method in any one of the first aspect or the implementations of the first aspect is performed, the method in any one of the second aspect or the implementations of the second aspect is performed, the method in any one of the third aspect or the implementations of the third aspect is performed, or the method in any one of the fourth aspect or the implementations of the fourth aspect is performed.

According to a ninth aspect, a computer program product is provided. When the computer program product is executed on a computing device, the method in any one of the first aspect or the implementations of the first aspect is performed, the method in any one of the second aspect or the implementations of the second aspect is performed, the method in any one of the third aspect or the implementations of the third aspect is performed, or the method in any one of the fourth aspect or the implementations of the fourth aspect is performed.

**BRIEF DESCRIPTION OF DRAWINGS**

FIG. 1 is a schematic diagram of a structure of a communication system to which an embodiment of this application is applicable;
FIG. 2 is a schematic flowchart of a spectrum sensing method according to an embodiment of this application;
FIG. 3 is a schematic diagram of an example format of a spectrum sensing request frame according to an embodiment of this application;
FIG. 4 is a schematic diagram of an example format of another spectrum sensing request frame according to an embodiment of this application;
FIG. 5 is a schematic diagram of an example format of an element field in a spectrum sensing request frame according to an embodiment of this application;

FIG. 6 is a schematic diagram of an example format of still another spectrum sensing request frame according to an embodiment of this application;

FIG. 7 is a schematic diagram of an example format of yet another spectrum sensing request frame according to an embodiment of this application;

FIG. 8 is a schematic diagram of an example format of a spectrum sensing feedback frame according to an embodiment of this application;

FIG. 9 is a schematic diagram of an example format of an element field in a spectrum sensing feedback frame according to an embodiment of this application;

FIG. 10 is a schematic diagram of an example format of another element field in a spectrum sensing feedback frame according to an embodiment of this application;

FIG. 11 is a schematic diagram of an example format of another spectrum sensing feedback frame according to an embodiment of this application;

FIG. 12 is a schematic diagram of an example format of still another spectrum sensing feedback frame according to an embodiment of this application;

FIG. 13 is a schematic flowchart of another spectrum sensing method according to an embodiment of this application;

FIG. 14 is a schematic flowchart of still another spectrum sensing method according to an embodiment of this application;

FIG. 15 is a schematic diagram of a principle of MCS inference according to an embodiment of this application;

FIG. 16A and FIG. 16B are a schematic flowchart of yet another spectrum sensing method according to an embodiment of this application;

FIG. 17 is a schematic flowchart of a consistency test according to an embodiment of this application;

FIG. 18 is a schematic diagram of a structure of a spectrum sensing apparatus according to an embodiment of this application;

FIG. 19 is a schematic diagram of a structure of another spectrum sensing apparatus according to an embodiment of this application;

FIG. 20 is a schematic diagram of a structure of still another spectrum sensing apparatus according to an embodiment of this application; and

FIG. 21 is a schematic diagram of a structure of yet another spectrum sensing apparatus according to an embodiment of this application.

## DESCRIPTION OF EMBODIMENTS

The following describes embodiments of this application with reference to accompanying drawings in embodiments of this application.

Embodiments of this application may be applied to WLAN communication. A standard version of a WLAN has been continuously evolved and developed from standards such as IEEE 802.11a/b/g/n/ac/ax, and 802.11be which is under discussion. The 802.11n standard is also referred to as high throughput (high throughput, HT), the 802.11ac standard is referred to as very high throughput (very high throughput, VHT), 802.11ax is referred to as high efficiency (high efficient, HE), 802.11be is referred to as extremely high throughput (extremely high throughput, EHT), and standards before the HT, such as 802.11a/b/g, are collectively referred to as non-high throughput (Non-HT).

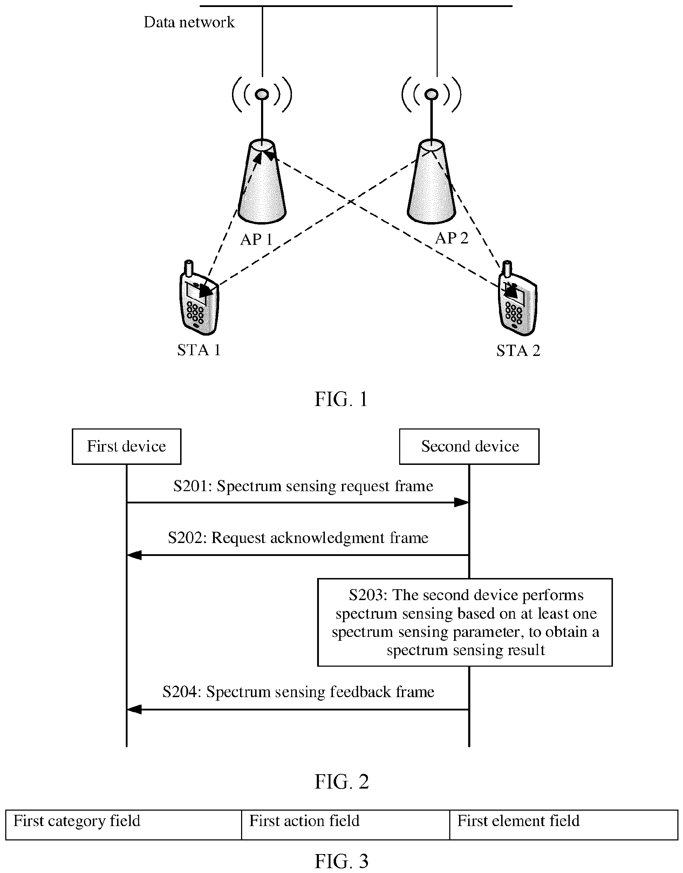

A WLAN communication system includes an access point (access point, AP) and a station (station, STA), and the station may also be referred to as a station or a non-access point (non-AP) station. Related wireless communication scenarios may include communication between an AP and a STA, communication between APs, communication between STAs, and the like. In embodiments of this application, communication between the AP and the STA is used as an example for description. As shown in FIG. 1, an AP 1 may perform wireless communication with a STA 1 and a STA 2, and an AP 2 may also perform wireless communication with the STA 1 and the STA2. For example, an AP and a STA associated with the AP may perform uplink and downlink communication according to the IEEE 802.11 protocol, or certainly may perform communication according to another protocol. This is not limited in this application. The AP 1 and the AP 2 may access a data network in a wired or wireless manner. It should be understood that methods in embodiments of this application are also applicable to communication between APs, communication between STAs, and the like.

A structure of each of the AP and the STA in embodiments of this application may include a media access control (media access control, MAC) layer and a physical (physical, PHY) layer. The AP and the STA may perform PPDU transmission by using a physical layer protocol data unit (PHY protocol data unit, PPDU). In addition, a frame structure of the PPDU varies with a wireless communication protocol used by the AP and the STA.

A receiver/transmitter obtaining a spectrum sensing result of a peer end is of great significance for improving communication performance of the receiver end and the transmitter end. Currently, there is no related solution to accurately obtain the spectrum sensing result of the peer end.

This application provides a spectrum sensing solution. A second device may perform spectrum sensing based on information carried in a spectrum sensing request frame sent by a first device, or perform spectrum sensing based on information in a spectrum sensing request frame acknowledged by a first device; and the first device may obtain an accurate spectrum sensing result of the second device.

FIG. 2 is a schematic flowchart of a spectrum sensing method according to an embodiment of this application. The method may include the following steps.

S201: A first device sends a spectrum sensing request frame to a second device.

Correspondingly, the second device receives the spectrum sensing request frame.

The first device wants to obtain a spectrum sensing result of the second device. Therefore, the first device sends the spectrum sensing request frame to the second device. The spectrum sensing request frame is used to request the second device to perform spectrum sensing. The spectrum sensing request frame includes at least one of the following spectrum sensing parameters: a start time of spectrum sensing, an end time of spectrum sensing, spectrum sensing duration, a sampling frequency of spectrum sensing, and a type of the spectrum sensing result. The spectrum sensing request frame may include one or more of the spectrum sensing parameters. For example, the spectrum sensing request frame includes the start time of spectrum sensing, the end time of spectrum sensing, the sampling frequency of spectrum sensing, and the type of the spectrum sensing result. For another example, the spectrum sensing request frame includes the start time of spectrum sensing, the spectrum sensing duration, the sampling frequency of spectrum sensing, and the type of the spectrum sensing result. The spectrum sensing request frame may alternatively be in another form.

The start time of spectrum sensing, the end time of spectrum sensing, and the spectrum sensing duration indicate time information of spectrum sensing performed by the second device. The first device includes the time information of spectrum sensing in the spectrum sensing request frame. This facilitates synchronous spectrum sensing performed by the first device and the second device.

The sampling frequency of spectrum sensing indicates a frequency at which the second device performs sampling. Certainly, the spectrum sensing request frame may not include the parameter, and the second device may perform sampling at a default sampling frequency.

The type of the spectrum sensing result includes at least one of the following: first spectrum sensing information and a first MCS. In other words, the first device may indicate, based on the type of the spectrum sensing result in the spectrum sensing request frame, the second device to feed back the first spectrum sensing information, the first MCS, or the first spectrum sensing information and the first MCS. The first spectrum sensing information is information obtained through spectrum sensing performed by the second device, and the first MCS is obtained through inference of the second device based on the first spectrum sensing information obtained through sensing of the second device. The first spectrum sensing information includes interference energy information in a radio environment of the second device, and truly indicates the radio environment of the second device.

Specifically, a format of the spectrum sensing request frame may be implemented by using any one of the following. Certainly, the format of the spectrum sensing request frame is not limited in this application.

In an implementation, FIG. 3 is a schematic diagram of an example format of a spectrum sensing request frame according to this embodiment of this application. The spectrum sensing request frame includes a first category (category) field, a first action (action) field, and a first element (element) field. The first category field indicates that a type of the spectrum sensing request frame is a spectrum sensing type; the first action field indicates that an action is a spectrum sensing request; and the first element field includes the at least one spectrum sensing parameter, and is information required for performing the action indicated by the first action field.

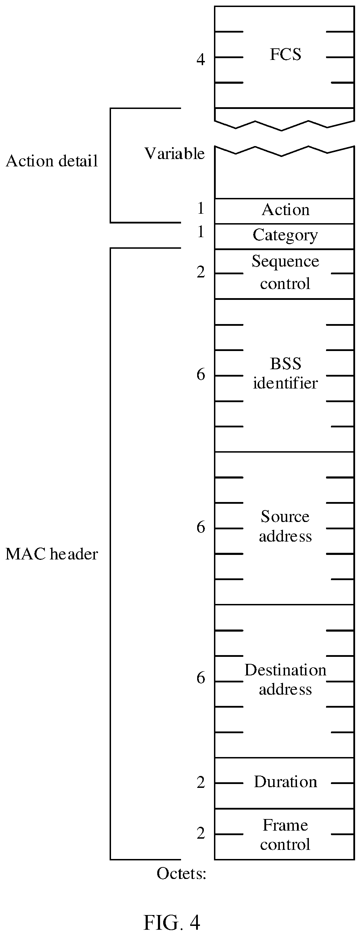

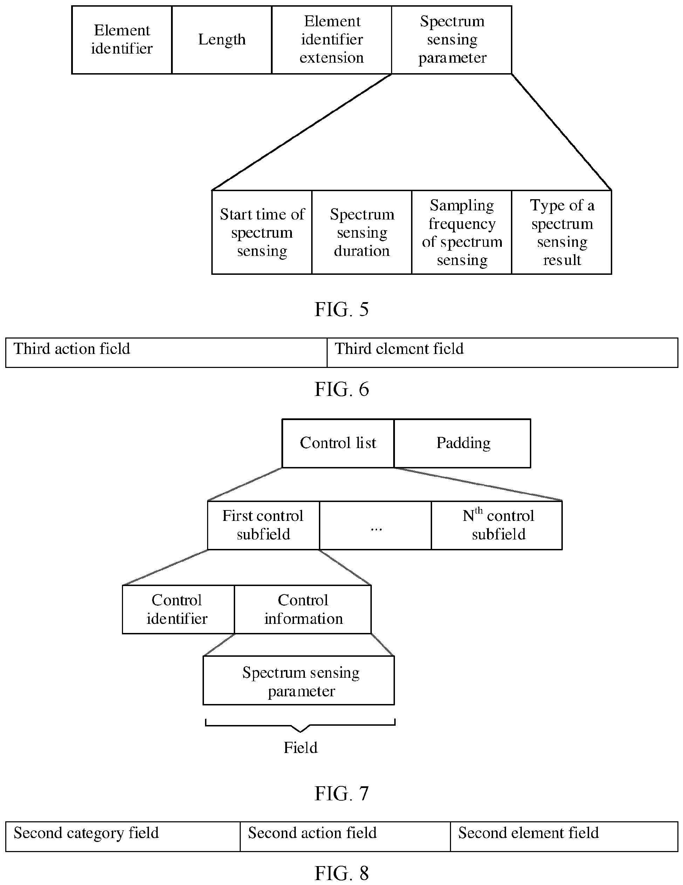

Based on the format of the spectrum sensing request frame shown in FIG. 3, the spectrum sensing request frame may be specifically a management frame shown in FIG. 4. The management frame includes a category field and an action details (action details) field, and may further include a medium access control (medium access control, MAC) header and a frame check sequence (frame check sequence) field. The action details field includes an action field and one or more element fields. The category field indicates that the type of the spectrum sensing request frame is the spectrum sensing type. The action field indicates that the action is the spectrum sensing request. A specific format of the element field is shown in FIG. 5. The element field includes an element identifier (element identifier) field, a length (length) field, an element identifier extension (element identifier extension) field, and a spectrum sensing parameters (spectrum sensing parameters) field. The element identifier field and the element identifier extension field jointly indicate that the element field carries the at least one spectrum sensing parameter. The spectrum sensing parameters field includes the at least one spectrum sensing parameter. The MAC header may further include a frame control (frame control) field, a duration (duration) field, a destination address (destination address, DA) field, a source address (source address, SA) field, a basic service set identifier (basic service set identifier, BSS ID) field, and a sequence control (sequence control, seq-ctl) field.

In another implementation, FIG. 6 is a schematic diagram of an example format of another spectrum sensing request frame according to this embodiment of this application. Different from the spectrum sensing request frame shown in FIG. 3, the spectrum sensing request frame includes a third action field and a third element field. Specifically, the third action field indicates that an action is a spectrum sensing request, and it may be determined, based on the third action field, that a type of the frame is a spectrum sensing type; and the third element field includes the at least one spectrum sensing parameter. For specific implementations of the third action field and the third element field, refer to the descriptions of the foregoing implementation.

In still another implementation, FIG. 7 is a schematic diagram of an example format of still another spectrum sensing request frame according to this embodiment of this application. The spectrum sensing request frame may include an aggregated control field (A-control field). As shown in FIG. 7, the aggregated control field includes a control list (control list) field and a padding (padding) part field. A length of the control list field is variable, and the control list field includes N control subfields (control subfields), where N is a positive integer. The padding part field includes 0 or more bits. One control subfield includes a control identifier (control identifier) subfield and control information (control information) subfield. Specifically, the spectrum sensing request frame includes a first aggregated control subfield, and the first aggregated control subfield includes the at least one spectrum sensing parameter.

S202: The second device sends a request acknowledgment frame to the first device.

Correspondingly, the first device receives the request acknowledgment frame.

The request acknowledgment frame is used to acknowledge that the spectrum sensing request frame is received.

S203: The second device performs spectrum sensing based on the at least one spectrum sensing parameter, to obtain the spectrum sensing result.

After receiving the spectrum sensing request frame, the second device performs spectrum sensing based on the at least one spectrum sensing parameter, to obtain the spectrum sensing result. Specifically, the second device may obtain spectrum sensing information through energy detection (energy detection) or carrier sensing (carrier sensing).

Specifically, the second device performs spectrum sensing based on the time information of spectrum sensing indicated by the spectrum sensing request frame and at the sampling frequency indicated by the spectrum sensing request frame, and obtains the spectrum sensing result of the type indicated by the spectrum sensing request frame.

In one manner, if the type of the spectrum sensing result is spectrum sensing information, the second device performs spectrum sensing based on the time information of spectrum sensing indicated by the spectrum sensing request frame and at the sampling frequency indicated by the spectrum sensing request frame, to obtain the spectrum sensing information.

In another manner, if the type of the spectrum sensing result is an MCS, the second device performs spectrum sensing based on the time information of spectrum sensing indicated by the spectrum sensing request frame and at the sampling frequency indicated by the spectrum sensing request frame, to obtain the spectrum sensing information; and performs inference based on the spectrum sensing information, to obtain the MCS.

S204: The second device sends a spectrum sensing feedback frame to the first device.

Correspondingly, the first device receives the spectrum sensing feedback frame.

After performing spectrum sensing to obtain the spectrum sensing result, the second device sends the spectrum sensing feedback frame to the first device, where the spectrum sensing feedback frame is used to feed back the spectrum sensing result.

Specifically, a format of the spectrum sensing feedback frame may be implemented by using any one of the following. Certainly, the format of the spectrum sensing feedback frame is not limited in this application.

In an implementation, FIG. 8 is a schematic diagram of an example format of a spectrum sensing feedback frame according to this embodiment of this application. The spectrum sensing feedback frame includes a second category field, a second action field, and a second element field. The second category field indicates that a type of the spectrum sensing feedback frame is a spectrum sensing type; the second action field indicates that an action is spectrum sensing feedback; and the second element field includes the spectrum sensing result.

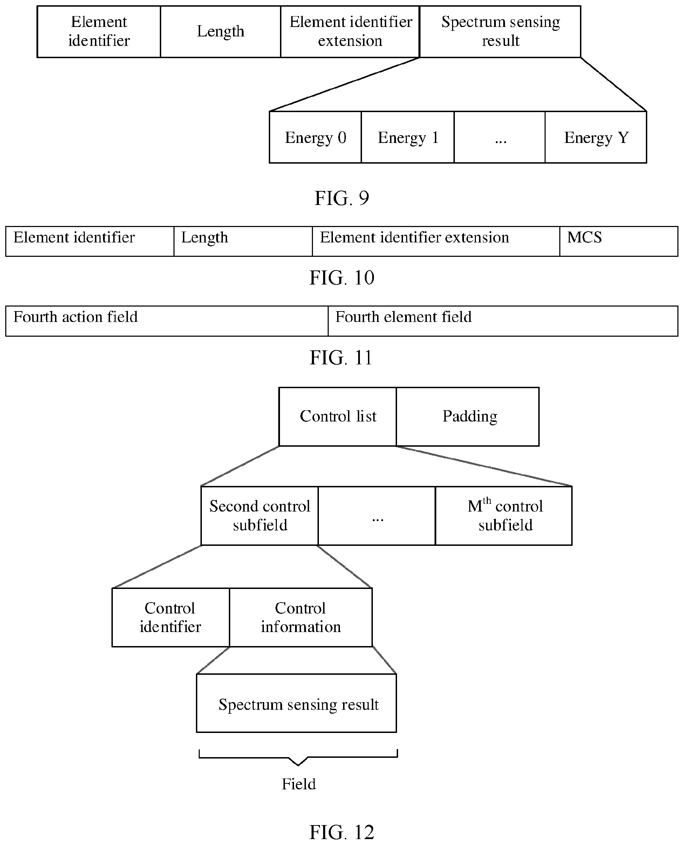

Based on the format of the spectrum sensing feedback frame shown in FIG. 8, the spectrum sensing feedback frame may be specifically the management frame shown in FIG. 4. For the format of the management frame, refer to the foregoing description. The action details field includes the action field and the one or more element fields. The category field indicates that the type of the spectrum sensing feedback frame is the spectrum sensing type. The action field indicates that the action is the spectrum sensing feedback. A specific format of the element field is shown in FIG. 9 or FIG. 10. The element field includes an element identifier field, a length field, an element identifier extension field, and a spectrum sensing results (spectrum sensing results) field. The element identifier field and the element identifier extension field jointly indicate that the element field carries the spectrum sensing result. As shown in FIG. 9, the spectrum sensing results field includes spectrum sensing information. The spectrum sensing information includes spectrum energy collected in one or more time periods, for example, energy (energy) 0 to energy Y shown in FIG. 9, where Y is a positive integer. As shown in FIG. 10, the spectrum sensing results field includes the MCS obtained through inference based on the spectrum sensing information obtained through sensing of the second device.

In another implementation, FIG. 11 is a schematic diagram of an example format of another spectrum sensing feedback frame according to this embodiment of this application. Different from the spectrum sensing feedback frame shown in FIG. 8, the spectrum sensing feedback frame includes a fourth action field and a fourth element field. The fourth action field indicates that an action is spectrum sensing feedback, and it may be determined, based on the fourth action field, that a type of the frame is a spectrum sensing type; and the fourth element field includes the spectrum sensing result. For specific implementations of the fourth action field and the fourth element field, refer to the foregoing descriptions.

In still another implementation, FIG. 12 is a schematic diagram of an example format of still another spectrum sensing feedback frame according to this embodiment of this application. The spectrum sensing feedback frame may include an aggregated control field. As shown in FIG. 12, the aggregated control field includes a control list field and a padding part field. A length of the control list field is variable, and the control list field includes M control subfields, where M is a positive integer. The padding part field includes 0 or more bits. One control subfield includes a control identifier subfield and a control information subfield. Specifically, the spectrum sensing feedback frame includes a second aggregated control subfield. The second aggregated control subfield includes the spectrum sensing result.

According to the spectrum sensing method provided in this embodiment of this application, the first device sends the spectrum sensing request frame, so that the second device can perform spectrum sensing based on the information carried in the spectrum sensing request frame, and the first device can obtain the accurate spectrum sensing result of the second device.

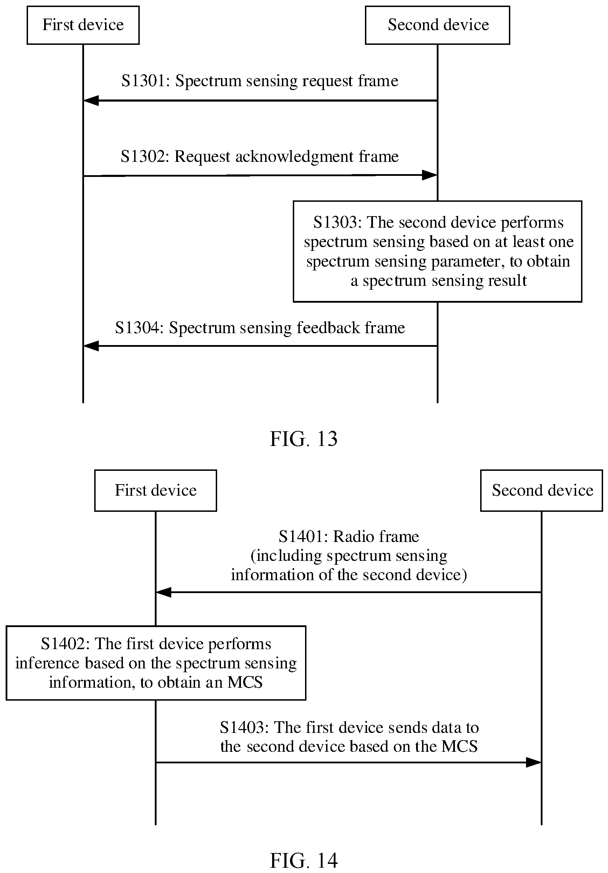

FIG. 13 is a schematic flowchart of another spectrum sensing method according to an embodiment of this application. The method may include the following steps.

S1301: A second device sends a spectrum sensing request frame to a first device.

Correspondingly, the first device receives the spectrum sensing request frame.

A difference between this embodiment and the embodiment shown in FIG. 2 is that the second device may also send the spectrum sensing request frame to the first device, where the spectrum sensing request frame is used to request the first device to acknowledge at least one of the following spectrum sensing parameters. The spectrum sensing request frame includes at least one of the following spectrum sensing parameters: a start time, an end time, duration, a sampling frequency, and a result type. For a definition of the spectrum sensing parameter and a format of the spectrum sensing request frame, refer to the related descriptions of step S201 in the embodiment shown in FIG. 2.

S1302: The first device sends a request acknowledgment frame to the second device.

Correspondingly, the second device receives the request acknowledgment frame.

The first device receives the spectrum sensing request frame sent by the second device, and sends the request acknowledgment frame to the second device if it is acknowledged that the second device can perform spectrum sensing based on the at least one spectrum sensing parameter. The request acknowledgment frame is used to acknowledge that the spectrum sensing request frame is received.

S1303: The second device performs spectrum sensing based on the at least one spectrum sensing parameter, to obtain a spectrum sensing result.

For a specific implementation of this step, refer to the related descriptions of step S203 in the embodiment shown in FIG. 2.

S1304: The second device sends a spectrum sensing feedback frame to the first device, where the spectrum sensing feedback frame is used to feed back the spectrum sensing result.

Correspondingly, the first device receives the spectrum sensing feedback frame.

For a specific implementation of this step, refer to the related descriptions of step S204 in the embodiment shown in FIG. 2.

According to the spectrum sensing method provided in this embodiment of this application, the second device sends the spectrum sensing request frame to the first device, and performs spectrum sensing based on information in the spectrum sensing request frame acknowledged by the first device; and the first device may obtain the accurate spectrum sensing result of the second device.

In a short-range/Wi-Fi wireless network and the like, rate adaptation is a core algorithm protocol, and is used to change a data transmission rate based on an existing real-time channel status, to improve transmission performance of a system. Rate adaptation is to change the transmission rate by selecting different MCSs. If channel quality is fixed, selecting an excessively high MCS may cause a severe packet loss, or selecting an excessively low MCS may prolong a channel occupation time, reduce channel efficiency, and easily cause a conflict in a scenario in which there are a large quantity of hidden terminals. Therefore, a status of rate adaptation plays a decisive role in user experience.

An existing rate adaptation algorithm is a sampling-based (sampling-based) rate adaptation algorithm. A basic principle of the rate adaptation algorithm is to: sample all MCSs, collect statistics on characteristic quantities of each MCS, such as throughput and a packet loss rate, and finally determine an MCS based on the statistical characteristic quantities. However, in the method, a sampling period is long, and an obtained statistical value cannot indicate a current radio environment. In addition, if a poor MCS is selected during sampling, performance deteriorates.

Another existing rate adaptation algorithm is a signal-to-noise ratio-based (SNR-based) rate adaptation algorithm. A basic principle of the rate adaptation algorithm is that a transmit end selects an MCS based on channel quality fed back by a receive end. However, Wi-Fi operates on an unlicensed spectrum, channels of different networks are shared, devices interfere with each other and cause collision, and an SNR does not include interference information. Consequently, an MCS estimated based on the SNR usually has a large deviation.

This application provides still another spectrum sensing method. After receiving spectrum sensing information of a second device or spectrum sensing information obtained by compensating, based on a spectrum sensing compensation value obtained through a consistency test and after the consistency test of the first device and the second device, for spectrum sensing information obtained through sensing of the first device, the first device performs inference based on the spectrum sensing information, to obtain an appropriate MCS; and sends data to the second device based on the MCS. This can reduce a packet loss or increase a rate, and improve communication reliability.

FIG. 14 is a schematic flowchart of still another spectrum sensing method according to an embodiment of this application. The method may include the following steps.

S1401: A second device sends a radio frame to a first device.

Correspondingly, the first device receives the radio frame.

In this embodiment, the second device may perform spectrum sensing in real time to obtain spectrum sensing information at a moment; or the second device may perform spectrum sensing periodically to obtain frequency sensing information in a period of time. Specifically, the second device may obtain spectrum sensing information through energy detection or carrier sensing. The spectrum sensing information includes interference energy information in a radio environment of the second device.

After the second device obtains the spectrum sensing information, the second device feeds back the spectrum sensing information of the second device to the first device. Specifically, the second device sends the radio frame to the first device. The radio frame includes the spectrum sensing information of the second device. The radio frame may use any frame format.

For example, in a scenario in which a requirement on spectrum sensing precision is high, the second device may send the radio frame to the first device in real time.

For example, in a scenario in which a requirement on spectrum sensing precision is not high, the second device may alternatively send the radio frame to the first device periodically. This manner reduces a communication frequency, and reduces communication complexity.

For example, before the second device sends the radio frame to the first device, the method may further include: The first device sends another radio frame to the second device, where the radio frame is used to request to obtain the spectrum sensing information of the second device.

S1402: The first device performs inference based on the spectrum sensing information, to obtain an MCS.

After receiving the spectrum sensing information sent by the second device, the first device may perform inference based on the spectrum sensing information, to obtain the MCS.

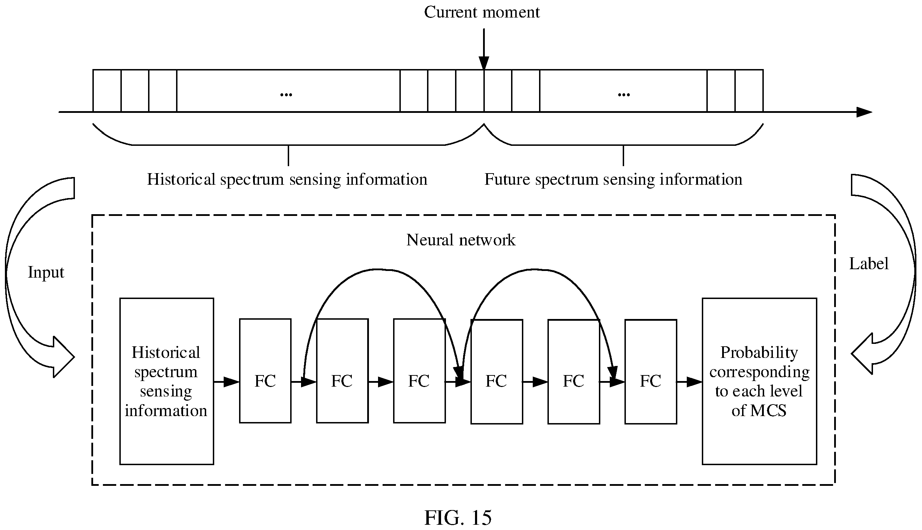

FIG. 15 is a schematic diagram of a principle of MCS inference according to this embodiment of this application. An MCS inference module in the first device obtains, by using a neural network and based on historical spectrum sensing information in a period of time, a probability that data transmission is performed based on each level of MCS. The first device sends the received spectrum sensing information to the MCS inference module, and selects an MCS with a maximum output probability for transmission.

In this embodiment, a fully connected network with a residual structure (fully connected network with residual structure) is used. The historical spectrum sensing information is used as an input of the network, and the probability that transmission is performed based on each level of MCS is used as an output of the network. A data label is generated based on spectrum sensing information in future, and a loss function is a cross entropy (cross entropy). In a training process, a small-batch gradient descent (mini-batch gradient descent) method is used to minimize the loss function and update network parameters of the neural network until convergence. It should be noted that a neural network structure is not limited to the fully connected network with the residual structure, and a convolutional neural network (convolutional neural network, CNN) or a recurrent neural network (recurrent neural network, RNN) and variants thereof such as a long short-term memory (long short-term memory, LSTM) and a gated recurrent unit (gated recurrent unit, GRU).

S1403: The first device sends data to the second device based on the MCS.

Correspondingly, the second device receives the data.

The first device performs MCS inference based on the spectrum sensing information sent by the second device, selects the MCS with the maximum output probability, and sends the data to the second device based on the MCS.

When the neural network is used to perform MCS inference, the input spectrum sensing information of the second device includes the interference energy information in the radio environment of the second device, and truly indicates the radio environment of the second device. Therefore, the MCS obtained through inference is appropriate. The first device sends the data to the second device based on the MCS. This can reduce a packet loss or increase a rate, and improve communication reliability.

According to the spectrum sensing method provided in this embodiment of this application, the first device receives the spectrum sensing information sent by the second device, where the spectrum sensing information includes the interference energy information in the radio environment of the second device, and the appropriate MCS may be obtained through inference based on the spectrum sensing information, so that the data is sent to the second device based on the MCS. This can reduce the packet loss or increase the rate, and improve the communication reliability.

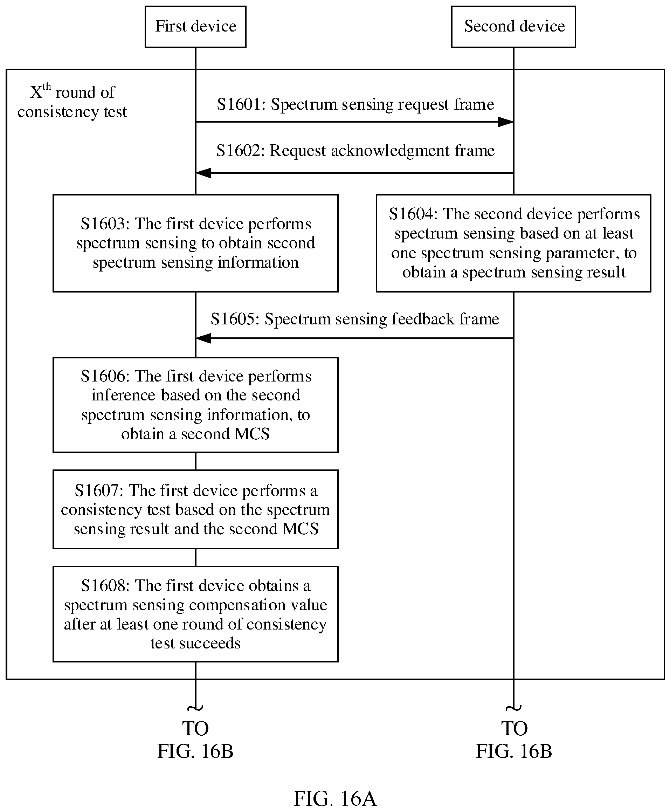

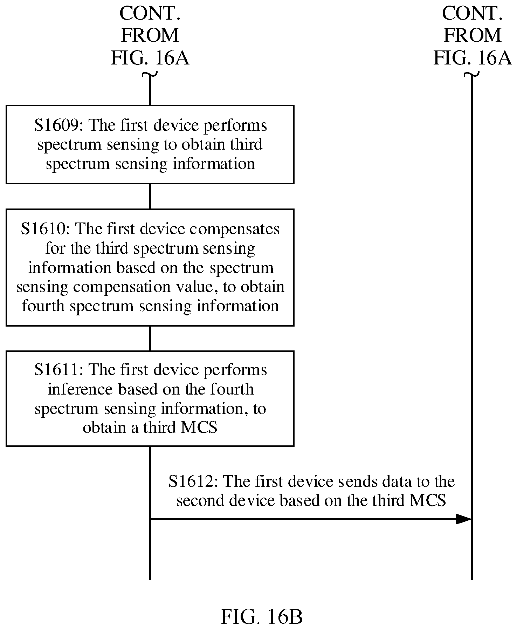

FIG. 16A and FIG. 16B are a schematic flowchart of yet another spectrum sensing method according to an embodiment of this application.

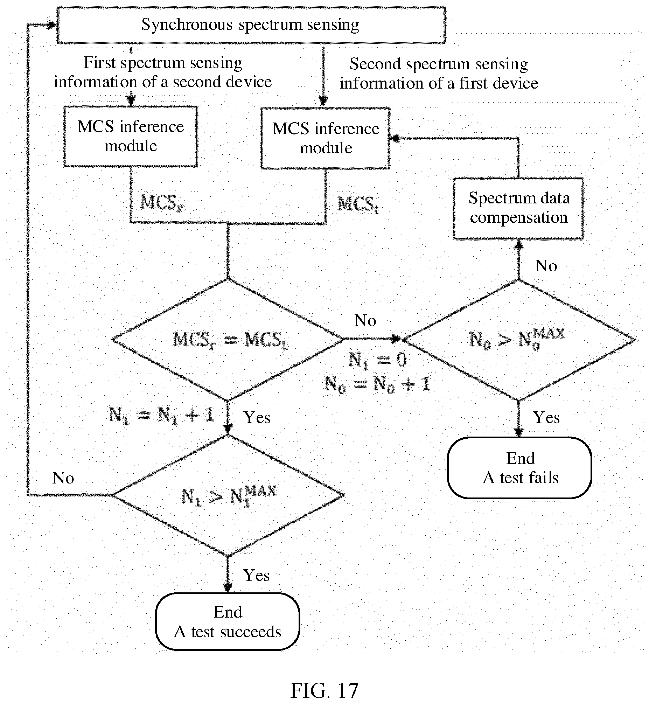

In this embodiment, a first device and a second device first perform $N_0^{MAX}$ rounds of consistency tests, to test consistency of spectrum sensing and MCS inference that are performed by the first device and the second device, where $N_0^{MAX}$ is a positive integer. FIG. 17 shows a specific consistency test procedure.

An $x^{th}$ round of consistency test includes the following steps S1601 to S1608, where $1 \leq x \leq N_0^{MAX}$.

As shown in FIG. 16A and FIG. 16B, the consistency test further includes synchronous spectrum sensing processes and an MCS inference comparison process. Steps S1601 to S1605 are the synchronous spectrum sensing processes of the first device and the second device. Steps S1606 to S1608 are the MCS inference comparison process.

S1601: The first device sends a spectrum sensing request frame to the second device.

Correspondingly, the second device receives the spectrum sensing request frame.

The spectrum sensing request frame is used to request the second device to perform spectrum sensing, and the spectrum sensing request frame includes at least one of the following spectrum sensing parameters: a start time of spectrum sensing, an end time of spectrum sensing, spectrum sensing duration, a sampling frequency of spectrum sensing, and a type of a spectrum sensing result.

For a specific implementation of this step, refer to step S201 in the foregoing embodiment.

S1602: The second device sends a request acknowledgment frame to the first device.

Correspondingly, the first device receives the request acknowledgment frame.

The request acknowledgment frame is used to acknowledge that the spectrum sensing request frame is received.

For a specific implementation of this step, refer to step S202 in the foregoing embodiment.

S1603: The first device performs spectrum sensing to obtain second spectrum sensing information.

The first device and the second device perform synchronous spectrum sensing, and may perform spectrum sensing based on at least one spectrum sensing parameter that is the same as that of the second device: a start time of spectrum sensing, an end time of spectrum sensing, spectrum sensing duration, and a sampling frequency of spectrum sensing, to obtain the second spectrum sensing information.

S1604: The second device performs spectrum sensing based on the at least one spectrum sensing parameter, to obtain a spectrum sensing result.

For a specific implementation of this step, refer to step S203 in the foregoing embodiment.

An execution sequence of steps S1603 and S1604 is not limited, and generally, steps S1603 and S1604 may be performed simultaneously.

S1605: The second device sends a spectrum sensing feedback frame to the first device, where the spectrum sensing feedback frame is used to feed back the spectrum sensing result.

Correspondingly, the first device receives the spectrum sensing feedback frame.

For a specific implementation of this step, refer to step S204 in the foregoing embodiment.

S1606: The first device performs inference based on the second spectrum sensing information, to obtain a second MCS.

For example, an MCS inference module in the first device uses the neural network shown in FIG. 15, inputs the spectrum sensing information to the neural network, to obtain a probability that data transmission is performed based on each level of MCS, and selects an MCS (MCSt shown in FIG. 17) with a maximum output probability as the second MCS.

S1607: The first device performs a consistency test based on the spectrum sensing result and the second MCS.

It should be noted that, if a type of the spectrum sensing result is spectrum sensing information in step S1604, the MCS inference module in the first device performs inference based on the first spectrum sensing information, to obtain a first MCS.

If a type of the spectrum sensing result is a first MCS (MCS$_r$ shown in FIG. 17) in step S1604, the first device does not need to perform MCS inference.

The first device performs the consistency test based on the spectrum sensing result and the second MCS. Specifically, as shown in FIG. 17, the first device determines whether the MCS$_r$ is equal to the MCSt. If the MCS$_r$ is equal to the MCSt, a counter Ni that passes the consistency test is increased by 1; or if the MCS$_r$ is not equal to the MCSt, a counter Ni is set to zero, and a counter $N_0$ indicating a number of test rounds is increased by 1.

S1608: The first device obtains a spectrum sensing compensation value after at least one round of consistency test succeeds.

As shown in FIG. 17, in the foregoing process of the $x^{th}$ round of consistency test, if the MCS$_r$ is equal to the MCSt, the counter Ni that passes the consistency test is increased by 1, then an $(x+1)^{th}$ round of consistency test continues if Ni does not exceed $N_1^{MAX}$, and the consistency test is stopped until $N_1$ reaches $N_1^{MAX}$

. A final result is that the test succeeds.

$$1 \leq N_1^{MAX} \leq N_0^{MAX}$$

In the foregoing process of the $x^{th}$ round of consistency test, if the $MCS_r$ is not equal to the $MCS_t$, the counter $N_0$ indicating the number of test rounds is increased by 1, and the counter $N_0$ indicating the number of test rounds does not exceed a maximum number of rounds $N_0^{MAX}$, the first device continues to perform the $(x+1)^{th}$ round of consistency test after compensating for spectrum data.

The first device obtains the spectrum sensing compensation value after the at least one round of consistency test. The spectrum sensing compensation value is a spectrum sensing compensation value obtained after a last round of test succeeds. The spectrum sensing compensation value may be 0, a positive number, or a negative number, and is in a unit of dB. That the spectrum sensing compensation value is 0 indicates that there is no need to compensate for the second spectrum sensing information. That the spectrum sensing compensation value is the positive number indicates that incremental compensation is performed on the second spectrum sensing information. For example, spectrum data compensation may be performed, for example, by 1 dB each time, by adding an offset value to the second spectrum sensing information. That the spectrum sensing compensation value is the negative number indicates that decremental compensation is performed on the second spectrum sensing information. For example, spectrum data compensation may be performed, for example, by 1 dB each time, by reducing an offset value from the second spectrum sensing information.

S1609: The first device performs spectrum sensing to obtain third spectrum sensing information.

Through the at least one round of consistency test, the consistency test of spectrum sensing and MCS inference of the first device and the second device succeeds. In this case, the first device can perform spectrum sensing to obtain the third spectrum sensing information.

S1610: The first device compensates for the third spectrum sensing information based on the spectrum sensing compensation value, to obtain fourth spectrum sensing information.

After obtaining the third spectrum sensing information, the first device compensates for the third spectrum sensing information based on the spectrum sensing compensation value obtained through the consistency test, to obtain the fourth spectrum sensing information.

S1611: The first device performs inference based on the fourth spectrum sensing information, to obtain a third MCS.

For a specific implementation of this step, refer to step S1402 or S1606.

S1612: The first device sends data to the second device based on the third MCS.

The first device performs inference based on the compensated third spectrum sensing information to obtain the appropriate third MCS, and sends the data to the second device based on the third MCS. This can reduce a packet loss, increase a rate, and improve communication reliability.

In this embodiment, spectrum sensing information similar to that of the second device is obtained in a manner of compensating, after the consistency test succeeds, for the spectrum sensing information obtained through sensing of the first device, so that the first device does not need to receive, from the second device, the spectrum sensing information obtained through sensing of the second device, thereby reducing communication interaction.

According to the spectrum sensing method provided in this embodiment of this application, the first device can compare the spectrum sensing result received from the second device with the MCS obtained through inference based on the spectrum sensing information obtained through spectrum sensing performed by the first device, to determine consistency of spectrum sensing of the first device and the second device; and the spectrum sensing compensation value of the first device is obtained after the consistency test succeeds. After obtaining the spectrum sensing compensation value of the first device based on the consistency test, the first device does not need to interact with the second device, and compensates for the spectrum sensing information based on the spectrum sensing compensation value and the spectrum sensing information obtained through sensing of the first device, to obtain the spectrum sensing information consistent with that of the second device, thereby obtaining the appropriate MCS based on compensated spectrum sensing information. This can reduce the packet loss, increase the rate, and improve the communication reliability.

The foregoing describes the solutions provided in embodiments of this application. It may be understood that, to implement the foregoing functions, a spectrum sensing apparatus (for example, which may be a first station or a second station) includes corresponding hardware structures and/or software modules for performing the functions. A person skilled in the art should be easily aware that, in combination with units and algorithm steps of the examples described in embodiments disclosed in this specification, this application may be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the spectrum sensing apparatus may be divided into functional modules based on the foregoing method examples. For example, each functional module may be obtained through division based on each corresponding function, or two or more functions may be integrated into one processing module. The functional module may be implemented in a form of hardware, or may be implemented in a form of a software functional module. It should be noted that, in embodiments of this application, module division is an example, and is merely a logical function division. During actual implementation, another division manner may be used. The following uses an example in which functional modules are obtained through division based on corresponding functions for description.

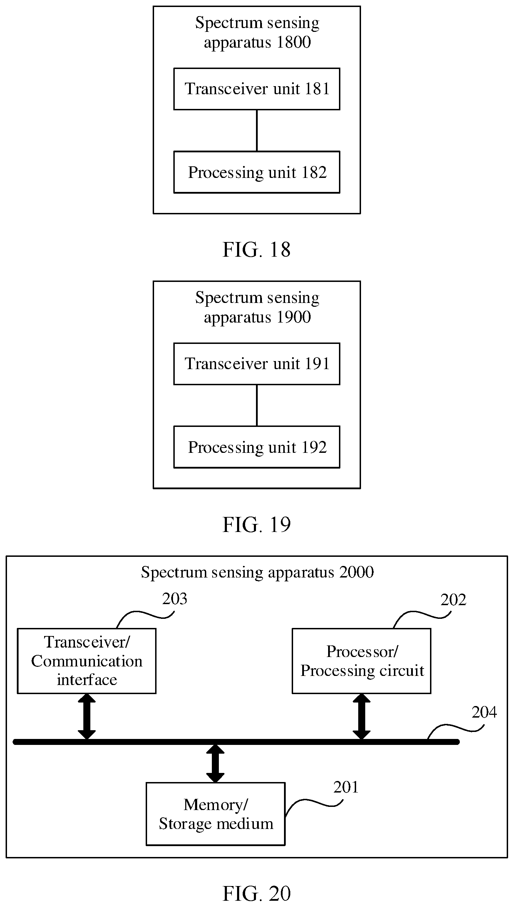

The spectrum sensing apparatus may be the first device. FIG. 18 is a schematic diagram of a possible structure of the spectrum sensing apparatus. The spectrum sensing apparatus 1800 includes a transceiver unit 181 and a processing unit 182.

In a possible implementation, the transceiver unit 181 is configured to send a spectrum sensing request frame to a second device, where the spectrum sensing request frame is used to request the second device to perform spectrum sensing, and the spectrum sensing request frame includes at least one of the following spectrum sensing parameters: a start time of spectrum sensing, an end time of spectrum sensing, spectrum sensing duration, a sampling frequency of spectrum sensing, and a type of a spectrum sensing result; the transceiver unit 181 is further configured to receive a request acknowledgment frame from the second device, where the request acknowledgment frame is used to acknowledge that the spectrum sensing request frame is received; and the transceiver unit 181 is further configured to receive a spectrum sensing feedback frame from the second device, where the spectrum sensing feedback frame is used to feed back the spectrum sensing result.

In a possible implementation, the transceiver unit 181 is configured to receive a spectrum sensing request frame from a second device, where the spectrum sensing request frame is used to request the apparatus to acknowledge at least one of the following spectrum sensing parameters: a start time of spectrum sensing, an end time of spectrum sensing, spectrum sensing duration, a sampling frequency of spectrum sensing, and a type of a spectrum sensing result; the transceiver unit 181 is further configured to send a request acknowledgment frame to the second device, where the request acknowledgment frame is used to acknowledge that the spectrum sensing request frame is received; and the transceiver unit 181 is further configured to receive a spectrum sensing feedback frame from the second device, where the spectrum sensing feedback frame is used to feed back the spectrum sensing result.

Optionally, the spectrum sensing result includes at least one of the following: first spectrum sensing information and a first modulation and coding scheme MCS.

Optionally, the first spectrum sensing information includes interference energy information in a radio environment of the second device.

Optionally, the spectrum sensing request frame includes a first category field, a first action field, and a first element field, the first category field indicates that a type of the spectrum sensing request frame is a spectrum sensing type, the first action field indicates that an action is a spectrum sensing request, and the first element field includes the at least one spectrum sensing parameter.

Optionally, the spectrum sensing feedback frame includes a second category field, a second action field, and a second element field, the second category field indicates that a type of the spectrum sensing feedback frame is a spectrum sensing type, the second action field indicates that an action is spectrum sensing feedback, and the second element field includes the spectrum sensing result.

Optionally, the spectrum sensing request frame includes a third action field and a third element field, the third action field indicates that an action is a spectrum sensing request, and the third element field includes the at least one spectrum sensing parameter.

Optionally, the spectrum sensing feedback frame includes a fourth action field and a fourth element field, the fourth action field indicates that an action is spectrum sensing feedback, and the fourth element field includes the spectrum sensing result.

Optionally, the spectrum sensing request frame includes a first aggregated control subfield, and the first aggregated control subfield includes the at least one spectrum sensing parameter.

Optionally, the spectrum sensing feedback frame includes a second aggregated control subfield, and the second aggregated control subfield includes the spectrum sensing result.

Optionally, the processing unit 182 is configured to perform spectrum sensing to obtain second spectrum sensing information; the processing unit 182 is further configured to perform inference based on the second spectrum sensing information, to obtain a second MCS; the processing unit 182 is further configured to perform at least one round of consistency test based on the spectrum sensing result and the second MCS; and the processing unit 182 is further configured to obtain a spectrum sensing compensation value after the at least one round of consistency test succeeds.

Optionally, the processing unit 182 is further configured to perform spectrum sensing to obtain third spectrum sensing information; the processing unit 182 is further configured to compensate for the third spectrum sensing information based on the spectrum sensing compensation value, to obtain fourth spectrum sensing information; the processing unit 182 is further configured to perform inference based on the fourth spectrum sensing information, to obtain a third MCS; and the transceiver unit 181 is further configured to send data to the second device based on the third MCS.

The spectrum sensing apparatus may be the second device. FIG. 19 is a schematic diagram of a possible structure of the spectrum sensing apparatus. The spectrum sensing apparatus 1900 includes a transceiver unit 191 and a processing unit 192.

In a possible implementation, the transceiver unit 191 is configured to receive a spectrum sensing request frame from a first device, where the spectrum sensing request frame is used to request the second device to perform spectrum sensing, and the spectrum sensing request frame includes at least one of the following spectrum sensing parameters: a start time of spectrum sensing, an end time of spectrum sensing, spectrum sensing duration, a sampling frequency of spectrum sensing, and a type of a spectrum sensing result; the transceiver unit 191 is further configured to send a request acknowledgment frame to the first device, where the request acknowledgment frame is used to acknowledge that the spectrum sensing request frame is received; the processing unit 192 is configured to perform spectrum sensing based on the at least one spectrum sensing parameter, to obtain a spectrum sensing result; and the transceiver unit 191 is further configured to send a spectrum sensing feedback frame to the first device, where the spectrum sensing feedback frame is used to feed back the spectrum sensing result.

In a possible implementation, the transceiver unit 191 is configured to send a spectrum sensing request frame to a first device, where the spectrum sensing request frame is used to request the first device to acknowledge at least one of the following spectrum sensing parameters: a start time of spectrum sensing, an end time of spectrum sensing, spectrum sensing duration, a sampling frequency of spectrum sensing, and a type of a spectrum sensing result; the transceiver unit 191 is further configured to receive a request acknowledgment frame from the first device, where the request acknowledgment frame is used to acknowledge that the spectrum sensing request frame is received; the processing unit 192 is configured to perform spectrum sensing based on the at least one spectrum sensing parameter, to obtain a spectrum sensing result; and the transceiver unit 191 is further configured to send a spectrum sensing feedback frame to the first device, where the spectrum sensing feedback frame is used to feed back the spectrum sensing result.

Optionally, the spectrum sensing result includes at least one of the following: first spectrum sensing information and a first modulation and coding scheme MCS.

Optionally, the first spectrum sensing information includes interference energy information in a radio environment of the second device.

Optionally, the spectrum sensing request frame includes a first category field, a first action field, and a first element field, the first category field indicates that a type of the spectrum sensing request frame is a spectrum sensing type, the first action field indicates that an action is a spectrum sensing request, and the first element field includes the at least one spectrum sensing parameter.

Optionally, the spectrum sensing feedback frame includes a second category field, a second action field, and a second element field, the second category field indicates that a type of the spectrum sensing feedback frame is a spectrum sensing type, the second action field indicates that an action is spectrum sensing feedback, and the second element field includes the spectrum sensing result.

Optionally, the spectrum sensing request frame includes a third action field and a third element field, the third action field indicates that an action is a spectrum sensing request, and the third element field includes the at least one spectrum sensing parameter.

Optionally, the spectrum sensing feedback frame includes a fourth action field and a fourth element field, the fourth action field indicates that an action is spectrum sensing feedback, and the fourth element field includes the spectrum sensing result.

Optionally, the spectrum sensing request frame includes a first aggregated control subfield, and the first aggregated control subfield includes the at least one spectrum sensing parameter.

Optionally, the spectrum sensing feedback frame includes a second aggregated control subfield, and the second aggregated control subfield includes the spectrum sensing result.

For all related content of each step in the foregoing method embodiments, refer to function descriptions of a corresponding functional module. Details are not described herein again.

FIG. 20 is diagram of a structure of a possible product form of a spectrum sensing apparatus according to an embodiment of this application.

In a possible product form, the spectrum sensing apparatus 2000 includes a processor 202 and a transceiver 203. The processor 202 is configured to perform a function of the processing unit 182 in the foregoing embodiment. The transceiver 203 is configured to perform a function of the transceiver unit 181 in the foregoing embodiment.

Optionally, the spectrum sensing apparatus 2000 may further include a memory 201.

In another possible product form, the spectrum sensing apparatus 2000 is alternatively implemented by a general-purpose processor, namely, a chip. The general-purpose processor includes a processing circuit 202 and a communication interface 203. Optionally, the general-purpose processor may further include a storage medium 201. The processing circuit 202 is configured to perform a function of the processing unit 182 in the foregoing embodiment. The communication interface 203 is configured to perform a function of the transceiver unit 181 in the foregoing embodiment.

In still another possible product form, the spectrum sensing apparatus may alternatively be implemented by using the following: one or more field-programmable gate arrays (field-programmable gate arrays, FPGAs), a programmable logic device (programmable logic device, PLD), a controller, a state machine, a logic gate, a discrete hardware component, any other suitable circuit, or any combination of circuits that can perform various functions described throughout this application.

The processor 202 may be a central processing unit, a general-purpose processor, a digital signal processor, an application-specific integrated circuit, a field-programmable gate array or another programmable logic device, a transistor logic device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of the digital signal processor and a microprocessor. The bus 204 may be a peripheral component interconnect (peripheral component interconnect, PCI) standard bus, an extended industry standard architecture (extended industry standard architecture, EISA) bus, or the like. The bus may be classified into an address bus, a data bus, a control bus, or the like. For ease of representation, only one thick line indicates the bus in FIG. 20, but this does not mean that there is only one bus or only one type of bus.

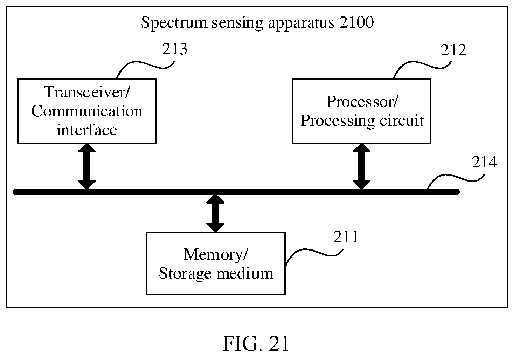

FIG. 21 is a diagram of a structure of a possible product form of a spectrum sensing apparatus according to an embodiment of this application.

In a possible product form, the spectrum sensing apparatus 2100 includes a processor 212 and a transceiver 213. The transceiver 213 is configured to perform a function of the transceiver unit 191 in the foregoing embodiment. The processor 212 is configured to perform a function of the processing unit 192 in the foregoing embodiment.

Optionally, the spectrum sensing apparatus may further include a memory 211.

In another possible product form, the spectrum sensing apparatus 2100 is alternatively implemented by a general-purpose processor, namely, a chip. The general-purpose processor includes a processing circuit 212 and a communication interface 213. Optionally, the general-purpose processor may further include a storage medium 211. The processing circuit 212 is configured to perform a function of the processing unit 192 in the foregoing embodiment. The communication interface 213 is configured to perform a function of the transceiver unit 191 in the foregoing embodiment.

In still another possible product form, the spectrum sensing apparatus may alternatively be implemented by using the following: one or more FPGAs, a PLD, a controller, a state machine, gate logic, a discrete hardware component, any other suitable circuit, or any combination of circuits that can perform various functions described in this application.

The processor 212 may be a central processing unit, a general-purpose processor, a digital signal processor, an application-specific integrated circuit, a field-programmable gate array or another programmable logic device, a transistor logic device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of the digital signal processor and a microprocessor. A bus 214 may be a PCI bus, an EISA bus, or the like. The bus may be classified into an address bus, a data bus, a control bus, or the like. For ease of representation, only one thick line indicates the bus in FIG. 21, but this does not mean that there is only one bus or only one type of bus.

A person of ordinary skill in the art may understand that all or some of the steps of the method embodiments may be implemented by hardware related to program instructions. The program instructions may be stored in a computer-readable storage medium. When the program instructions are executed, the steps of the method embodiments are performed. The foregoing storage medium includes any medium that can store program code, for example, a USB flash drive, a removable hard disk drive, a ROM, a RAM, a magnetic disk, or an optical disc.

In one aspect, an embodiment of this application further provides a readable storage medium. The readable storage medium stores computer-executable instructions, and when the computer-executable instructions are run, a device (which may be a single-chip microcomputer, a chip, a controller, or the like) or a processor is enabled to perform steps in a communication method provided in this application.

In one aspect, an embodiment of this application further provides a computer program product. The computer program product includes computer-executable instructions, and the computer-executable instructions are stored in a computer-readable storage medium, a processor of a device may read the computer-executable instructions from the computer-readable storage medium, and the processor executes the computer-executable instructions, so that the device performs steps in a communication method provided in this application.

It may be clearly understood by a person skilled in the art that, for ease and brevity of description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in another manner. For example, division into the units is merely logical function division and may be another division during actual implementation. For example, a plurality of units or components may be combined or integrated into another system, or some features may be ignored or not performed. The displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, in other words, may be located in one position, or may be distributed on a plurality of network units. Some or all of the units may be selected based on an actual requirement to achieve the objectives of the solutions of embodiments.

All or some of the foregoing embodiments may be implemented by software, hardware, firmware, or any combination thereof. When software is used to implement embodiments, all or a part of the embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium, or transmitted by using the computer-readable storage medium. The computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a read-only memory (read-only memory, ROM), a random access memory (random access memory, RAM), or a magnetic medium, for example, a floppy disk, a hard disk drive, a magnetic tape, a magnetic disk, or an optical medium, for example, a digital versatile disc (digital versatile disc, DVD), or a semiconductor medium, for example, a solid-state disk (solid state disk, SSD).

**Claims**

1. A spectrum sensing method, wherein the method comprises:

sending, by a first device, a spectrum sensing request frame to a second device, wherein the spectrum sensing request frame is used to request the second device to perform spectrum sensing, and the spectrum sensing request frame comprises at least one of the following spectrum sensing parameters: a start time of spectrum sensing, an end time of spectrum sensing, spectrum sensing duration, a sampling frequency of spectrum sensing, or a type of a spectrum sensing result;
receiving, by the first device, a request acknowledgment frame from the second device, wherein the request acknowledgment frame is used to acknowledge that the spectrum sensing request frame is received; and
receiving, by the first device, a spectrum sensing feedback frame from the second device, wherein the spectrum sensing feedback frame is used to feed back the spectrum sensing result.

2. A spectrum sensing method, wherein the method comprises:

receiving, by a second device, a spectrum sensing request frame from a first device, wherein the spectrum sensing request frame is used to request the second device to perform spectrum sensing, and the spectrum sensing request frame comprises at least one of the following spectrum sensing parameters: a start time of spectrum sensing, an end time of spectrum sensing, spectrum sensing duration, a sampling frequency of spectrum sensing, and a type of a spectrum sensing result;
sending, by the second device, a request acknowledgment frame to the first device, wherein the request acknowledgment frame is used to acknowledge that the spectrum sensing request frame is received;
performing, by the second device, spectrum sensing based on the at least one spectrum sensing parameter, to obtain the spectrum sensing result; and
sending, by the second device, a spectrum sensing feedback frame to the first device, wherein the spectrum sensing feedback frame is used to feed back the spectrum sensing result.

3. The method according to claim 1 or 2, wherein the spectrum sensing result comprises at least one of the following: first spectrum sensing information and a first modulation and coding scheme MCS.

4. The method according to claim 3, wherein the first spectrum sensing information comprises interference energy information in a radio environment of the second device.

5. The method according to any one of claims 1 to 4, wherein the spectrum sensing request frame comprises a first category field, a first action field, and a first element field, the first category field indicates that a type of the spectrum sensing request frame is a spectrum sensing type, the first action field indicates that an action is a spectrum sensing request, and the first element field comprises the at least one spectrum sensing parameter.

6. The method according to any one of claims 1 to 5, wherein the spectrum sensing feedback frame comprises a second category field, a second action field, and a second element field, the second category field indicates that a type of the spectrum sensing feedback frame is a spectrum sensing type, the second action field indicates that an action is spectrum sensing feedback, and the second element field comprises the spectrum sensing result.

7. The method according to any one of claims 1 to 4, wherein the spectrum sensing request frame comprises a third action field and a third element field, the third action field indicates that an action is a spectrum sensing request, and the third element field comprises the at least one spectrum sensing parameter.

8. The method according to any one of claims 1 to 4 and 7, wherein the spectrum sensing feedback frame comprises a fourth action field and a fourth element field, the fourth action field indicates that an action is spectrum sensing feedback, and the fourth element field comprises the spectrum sensing result.

9. The method according to any one of claims 1 to 4, wherein the spectrum sensing request frame comprises a first aggregated control subfield, and the first aggregated control subfield comprises the at least one spectrum sensing parameter.

10. The method according to any one of claims 1 to 4 and 9, wherein the spectrum sensing feedback frame comprises a second aggregated control subfield, and the second aggregated control subfield comprises the spectrum sensing result.

11. The method according to any one of claims 1 and 3 to 10, wherein the method further comprises:

    performing, by the first device, spectrum sensing to obtain second spectrum sensing information;
    performing, by the first device, inference based on the second spectrum sensing information, to obtain a second MCS;
    performing, by the first device, at least one round of consistency test based on the spectrum sensing result and the second MCS; and
    obtaining, by the first device, a spectrum sensing compensation value after the at least one round of consistency test succeeds.

12. The method according to claim 11, wherein the method further comprises:

    performing, by the first device, spectrum sensing to obtain third spectrum sensing information;
    compensating, by the first device, for the third spectrum sensing information based on the spectrum sensing compensation value, to obtain fourth spectrum sensing information;
    performing, by the first device, inference based on the fourth spectrum sensing information, to obtain a third MCS; and
    sending, by the first device, data to the second device based on the third MCS.

13. A spectrum sensing apparatus, wherein the apparatus is configured to implement the method according to any one of claims 1 and 3 to 12.

14. A spectrum sensing apparatus, wherein the apparatus is configured to implement the method according to any one of claims 2 to 10.

15. A spectrum sensing apparatus, comprising a processor, wherein the processor is coupled to a memory, and the processor is configured to read instructions in the memory, to implement the method according to any one of claims 1 and 3 to 12, or implement the method according to any one of claims 2 to 10.

16. A computer-readable storage medium, wherein the computer-readable storage medium stores a computer program, and when the program is executed by a processor, the method according to any one of claims 1 and 3 to 12 is implemented, or the method according to any one of claims 2 to 10 is implemented.

17. A computer program product, configured to: when executed on a computing device, perform the method according to any one of claims 1 and 3 to 12, or perform the method according to any one of claims 2 to 10.

18. A communication system, comprising:
    the spectrum sensing apparatus according to claim 13, and/or the spectrum sensing apparatus according to claim 14.

Data network

AP 1          AP 2

STA 1          STA 2

FIG. 1

| First device | Second device |

S201: Spectrum sensing request frame

S202: Request acknowledgment frame

S203: The second device performs spectrum sensing based on at least one spectrum sensing parameter, to obtain a spectrum sensing result

S204: Spectrum sensing feedback frame

FIG. 2

| First category field | First action field | First element field |
| --- | --- | --- |

FIG. 3

| | |
|---|---|
| 4 | FCS |
| Variable | |
| 1 | Action |
| 1 | Category |
| 2 | Sequence control |
| 6 | BSS identifier |
| 6 | Source address |
| 6 | Destination address |
| 2 | Duration |
| 2 | Frame control |

Action detail

MAC header

Octets:

FIG. 4

| Element identifier | Length | Element identifier extension | Spectrum sensing parameter |
|---|---|---|---|

| Start time of spectrum sensing | Spectrum sensing duration | Sampling frequency of spectrum sensing | Type of a spectrum sensing result |
|---|---|---|---|

FIG. 5

| Third action field | Third element field |
|---|---|

FIG. 6

| Control list | Padding |
|---|---|

| First control subfield | ... | $N^{th}$ control subfield |
|---|---|---|

| Control identifier | Control information |
|---|---|

| Spectrum sensing parameter |
|---|

Field

FIG. 7

| Second category field | Second action field | Second element field |
|---|---|---|

FIG. 8

| Element identifier | Length | Element identifier extension | Spectrum sensing result |
|---|---|---|---|

| Energy 0 | Energy 1 | ... | Energy Y |
|---|---|---|---|

FIG. 9

| Element identifier | Length | Element identifier extension | MCS |
|---|---|---|---|

FIG. 10

| Fourth action field | Fourth element field |
|---|---|

FIG. 11

| Control list | Padding |
|---|---|

| Second control subfield | ... | $M^{th}$ control subfield |
|---|---|---|

| Control identifier | Control information |
|---|---|

| Spectrum sensing result |
|---|

Field

FIG. 12

```
┌──────────────┐                                    ┌──────────────┐
│ First device │                                    │ Second device│
└──────┬───────┘                                    └──────┬───────┘
       │                                                   │
       │       S1301: Spectrum sensing request frame       │
       │ ◄─────────────────────────────────────────────────│
       │                                                   │
       │       S1302: Request acknowledgment frame          │
       │ ─────────────────────────────────────────────────►│
       │                                                   │
       │                              ┌────────────────────────────────────┐
       │                              │ S1303: The second device performs  │
       │                              │ spectrum sensing based on at least one│
       │                              │ spectrum sensing parameter, to obtain │
       │                              │   a spectrum sensing result          │
       │                              └────────────────────────────────────┘
       │       S1304: Spectrum sensing feedback frame       │
       │ ◄─────────────────────────────────────────────────│
       │                                                   │
```

FIG. 13

```
       ┌──────────────┐                              ┌──────────────┐
       │ First device │                              │ Second device│
       └──────┬───────┘                              └──────┬───────┘
              │                                             │
              │            S1401: Radio frame               │
              │         (including spectrum sensing          │
              │     information of the second device)        │
              │ ◄───────────────────────────────────────────│
              │                                             │
┌──────────────────────────────────┐                       │
│ S1402: The first device performs  │                       │
│ inference based on the spectrum sensing│                   │
│   information, to obtain an MCS    │                       │
└──────────────────────────────────┘                       │
              │       S1403: The first device sends data to  │
              │       the second device based on the MCS     │
              │ ────────────────────────────────────────────►│
              │                                             │
```

FIG. 14

23

FIG. 15

```
┌─────────────┐                          ┌──────────────┐
│ First device│                          │ Second device│
└─────────────┘                          └──────────────┘
```

| X^th round of consistency test | S1601: Spectrum sensing request frame → |
|---|---|

S1602: Request acknowledgment frame ←

S1603: The first device performs spectrum sensing to obtain second spectrum sensing information

S1604: The second device performs spectrum sensing based on at least one spectrum sensing parameter, to obtain a spectrum sensing result

S1605: Spectrum sensing feedback frame ←

S1606: The first device performs inference based on the second spectrum sensing information, to obtain a second MCS

S1607: The first device performs a consistency test based on the spectrum sensing result and the second MCS

S1608: The first device obtains a spectrum sensing compensation value after at least one round of consistency test succeeds

TO
FIG. 16B

TO
FIG. 16B

FIG. 16A

CONT.
FROM
FIG. 16A

CONT.
FROM
FIG. 16A

S1609: The first device performs
spectrum sensing to obtain third
spectrum sensing information

S1610: The first device compensates
for the third spectrum sensing
information based on the spectrum
sensing compensation value, to obtain
fourth spectrum sensing information

S1611: The first device performs
inference based on the fourth
spectrum sensing information, to
obtain a third MCS

S1612: The first device sends data to the
second device based on the third MCS

FIG. 16B

FIG. 17

Spectrum sensing
apparatus 1800

Transceiver unit 181

Processing unit 182

FIG. 18

Spectrum sensing
apparatus 1900

Transceiver unit 191

Processing unit 192

FIG. 19

Spectrum sensing apparatus 2000

203

202

Transceiver/
Communication
interface

Processor/
Processing circuit

204

201

Memory/
Storage medium

FIG. 20

FIG. 21

## INTERNATIONAL SEARCH REPORT

| International application No. |
| --- |
| **PCT/CN2022/133468** |

**A.    CLASSIFICATION OF SUBJECT MATTER**

H04B 17/382(2015.01)i

According to International Patent Classification (IPC) or to both national classification and IPC

**B.    FIELDS SEARCHED**

Minimum documentation searched (classification system followed by classification symbols)

IPC:H04B H04W

Documentation searched other than minimum documentation to the extent that such documents are included in the fields searched

Electronic data base consulted during the international search (name of data base and, where practicable, search terms used)

CNTXT; CNKI; ENTXTC; ENTXT; 3GPP: 频谱感知, 请求, 反馈, 交互, 结果, 对端, 第二设备, 调制编码方案, MCS, 一致性, 补偿, spectrum sensing, request, feedback, result, peer, second device, modulation and coding scheme, MCS, consistency, compensation

**C.    DOCUMENTS CONSIDERED TO BE RELEVANT**

| Category* | Citation of document, with indication, where appropriate, of the relevant passages | Relevant to claim No. |
| --- | --- | --- |
| X | CN 112350809 A (HUAWEI TECHNOLOGIES CO., LTD.) 09 February 2021 (2021-02-09) description, paragraphs 84-200, and figures 3 and 10-12 | 1-10, 13-18 |
| A | CN 103796221 A (CHINA ACADEMY OF TELECOMMUNICATIONS TECHNOLOGY) 14 May 2014 (2014-05-14) entire document | 1-18 |
| A | CN 108696325 A (10TH RESEARCH INSTITUTE OF CHINA ELECTRONICS TECHNOLOGY GROUP CORPORATION) 23 October 2018 (2018-10-23) entire document | 1-18 |
| A | WO 2021083368 A1 (HUAWEI TECHNOLOGIES CO., LTD.) 06 May 2021 (2021-05-06) entire document | 1-18 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **31 January 2023** | **07 February 2023** |

| Name and mailing address of the ISA/CN | Authorized officer |
| --- | --- |
| **China National Intellectual Property Administration (ISA/CN) China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
Information on patent family members

International application No.

**PCT/CN2022/133468**

| Patent document cited in search report | | | Publication date (day/month/year) | Patent family member(s) | | | Publication date (day/month/year) |
|---|---|---|---|---|---|---|---|
| CN | 112350809 | A | 09 February 2021 | None | | | |
| CN | 103796221 | A | 14 May 2014 | None | | | |
| CN | 108696325 | A | 23 October 2018 | None | | | |
| WO | 2021083368 | A1 | 06 May 2021 | EP | 4043917 | A1 | 17 August 2022 |
| | | | | EP | 4043917 | A4 | 09 November 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

*   CN 202111398330